# EUROPEAN PATENT APPLICATION

(11) **EP 2 330 513 A1**
(43) Date of publication of application: **08.06.2011**
(21) Application number: 10190031.4
(22) Date of filing: 04.11.2010
(51) Int. Cl.: G06F 13/10, G06F 9/455

(54) **User interface systems and methods between a portable device and computer**

(30) Priority: 11.11.2009 US 616676
(71) Applicant: Sony Corporation, Tokyo 108-0075 (JP)
(72) Inventor: Shirai, Kazuhiko, San Diego, CA 92129 (US); Habara, Yasuhiro, San Diego, CA 92130 (US); Kodera, Tsuyoshi, La Jolla, CA 92037 (US); Iwazaki, Koki, San Marcos, CA 92069 (US)
(74) Representative: Jackson, Jonathan Andrew

(57) **Abstract**

System and methods for viewing a mobile screen from a mobile device on the desktop of a computer by operating a predefined pair of a mobile application program and a computer application program to provide continuous seamless integration of the processing of the data file as a pseudo-single session. When the user operates certain operations, the document opened by the mobile device application program is saved as a file, and automatically transferred from the mobile device storage file system to the computer storage file system. A pre-defined equivalent application software on the computer is launched and the copied computer file is opened on the computer screen outside or overlapping to the mobile device screen emulation window.

## Description

This invention pertains generally to a computer interface, and more particularly to a computer interface between a mobile device and computer.

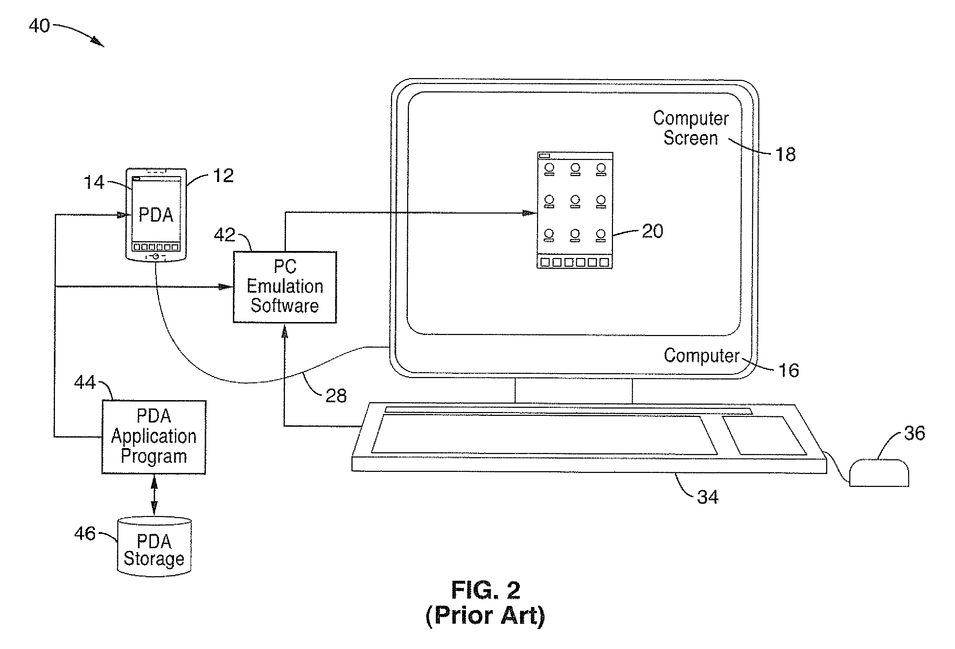

There is often a need to interface portable information devices, such as PDA's, smartphones, and other mobile devices, with a computer such as a desktop computer or laptop. Existing technology (shown as system 40 in FIG. 2) uses PC emulation software 42 intended to emulate the screen display replication 20 and user input device 12 (keyboard, and/or mouse) operations, and simple cut/copy/paste operations, drag and drop file transfers. Accordingly, an object of the present invention is to provide improved emulation between a mobile device and computer. At least some of these objectives will be met in the following disclosure.

The system and methods of present invention allow a user to view a mobile screen (e.g. from a PDA, smart phone, or other portable device) on the desktop of a computer. Furthermore, the mobile device may be controlled by using desktop keyboard and mouse. The system of the present invention allows for Copy/Cut/Paste operations of text between the mobile device and desktop, capture of part or all of a mobile screen, drag and drop of files to the mobile device. The system is preferably configured to support ActiveSync / IP Connection and applications such as Mobile Explorer (File Browse).

The present invention treats the predefined pair of a mobile application program and a computer application program, and provides continuous seamless integration of the processing of the data file as a pseudo-single session. On the emulated mobile (PDA) device screen on the screen of the connected computer, an application program is running on the mobile device and a document is displayed for viewing/processing/editing and its screen image is replicated on the computer screen. When the user operates certain operations, the document opened by the mobile device application program is saved as a file, and automatically transferred from the mobile device storage file system to the computer storage file system. Then a predefined equivalent application software on the computer will be launched and the copied computer file is opened on the computer screen outside or overlapping to the mobile device screen emulation window. When the computer processing of the file is completed, the file is transferred back to the mobile device.

An aspect of the invention is an interface system for coupling a mobile device to a PC, comprising: a PC emulation module configured emulate the screen of a mobile device in a first window on the display of a PC coupled to the mobile device; a file application association module configured to open an application associated with a file located in memory on the mobile device and display the application in a second window on the PC display; and a processor for operating the PC emulation module and file application association module.

In a preferred embodiment, the file application association module is configured to open the associated application in a second window overlapping or outside the first window. For example, the file application association module is configured to open a PC application stored on the PC to operate the file, wherein the PC application is associated with an application stored on the mobile device and is opened in the second window. Preferably, the file application association module is configured to operate the PC application using the PC's processor.

In another embodiment, the file application association module is configured to map one or more mobile device conditions to one or more PC actions in a database located on either the PC or mobile device. The mobile device conditions may comprise a mobile device application software identifier, a file type associated with the mobile device application software and other conditions. The one or more PC actions may comprise executing the PC application with the file.

Another aspect is an interface system for coupling a mobile device to a PC, comprising: a PC having a processor for executing a PC application stored in memory on the PC, and a display for displaying the executed PC application; a mobile device having a processor for executing a mobile device application stored in memory on the mobile device, and a display for displaying the executed mobile device application; a PC emulation module configured emulate the screen of the mobile device in a first window on the display of the PC; and a file application association module configured to execute a file on the mobile device with a PC application that is associated with the file and a mobile device application stored in memory on the mobile device, wherein the file application association module is configured to display the executed PC application in a second window on the PC display. Preferably, the file application association logic is configured to execute the PC application in a second window overlapping or outside the first window.

In one embodiment, the system further includes a database coupled to the file application association module, wherein file application association module is configured to map one or more mobile device conditions to one or more PC actions in the database.

Another aspect is a method for interfacing between a mobile device to a PC, comprising: coupling a mobile device to a PC; the PC having a processor for executing a PC application stored in memory on the PC, and a display for displaying the executed PC application; emulating the screen of the mobile device in a first window on the display of the PC; executing a file on the mobile device using a PC application that is associated with the file and a mobile device application stored in memory on the mobile device; and displaying the executed PC application in a second window on the PC display.

In a preferred embodiment, the executed PC application is displayed in a second window overlapping or outside the first window, and is executed using the PC's processor. The method also may include synchronizing the file between memory on the mobile device and the PC

In another embodiment, executing the PC application comprises selecting PC application software compatible with the file and associated mobile device application. For example, selecting PC application software may comprise mapping one or more mobile device conditions to one or more PC actions. The mobile device conditions may comprise a mobile device application software identifier and a file type associated with the mobile device application software. Optionally, the mobile device conditions may comprise status of the PC application, status of the opened file, or exception conditions.

In another embodiment, selecting the PC application software further comprises: looking up a receiving system action from a database according to the selected file and its associated application software.

In yet another embodiment, the receiving system action comprises executing the PC application, the method further comprising executing the receiving system action to execute the PC application and corresponding file.

Further aspects and/or embodiments of the invention will be brought out in the following portions of the specification, wherein the detailed description is for the purpose of fully disclosing preferred embodiments of the invention without placing limitations thereon.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG. 1 is a schematic diagram of a PDA coupled to a computer in accordance with the present invention.
FIG. 2 illustrates a prior art emulation system.
FIG. 3 illustrates a diagram of the mobile device emulation system of the present invention.
FIG. 4 shows a flow diagram of the application association logic in accordance with the present invention.
FIG. 5 illustrates originating system conditions in that are mapped by the application association logic of FIG. 4.
FIG. 6 illustrates exception conditions that may be mapped by the application association logic of FIG. 4.
FIG. 7 is a diagram of the receiving actions in the association database of the present invention.

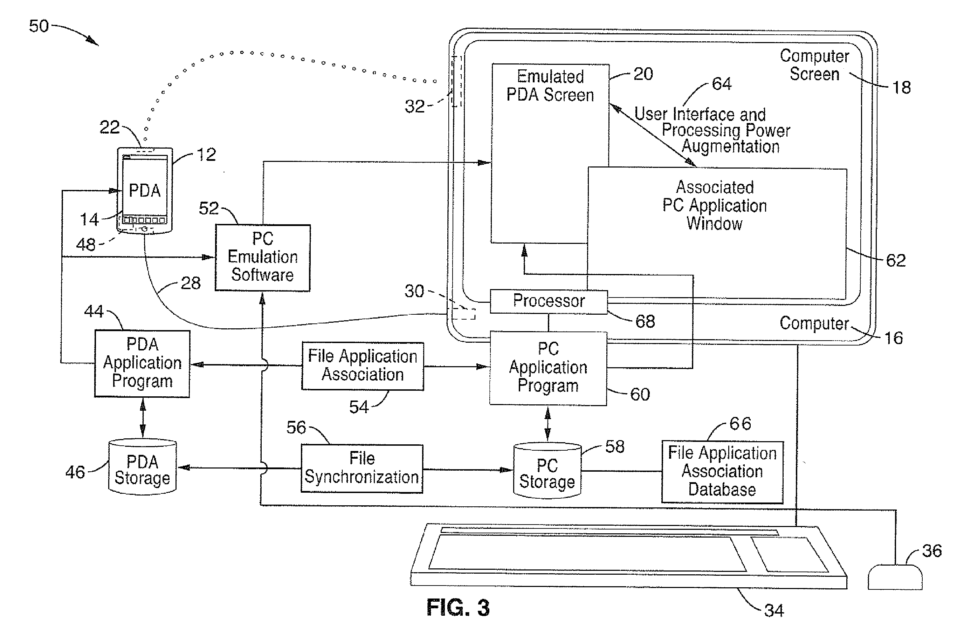

Referring more specifically to the drawings, for illustrative purposes the present invention is embodied in the apparatus generally shown in FIG. and FIG. 3 through FIG. 7. It will be appreciated that the apparatus may vary as to configuration and as to details of the parts, and that the method may vary as to the specific steps and sequence, without departing from the basic concepts as disclosed herein.

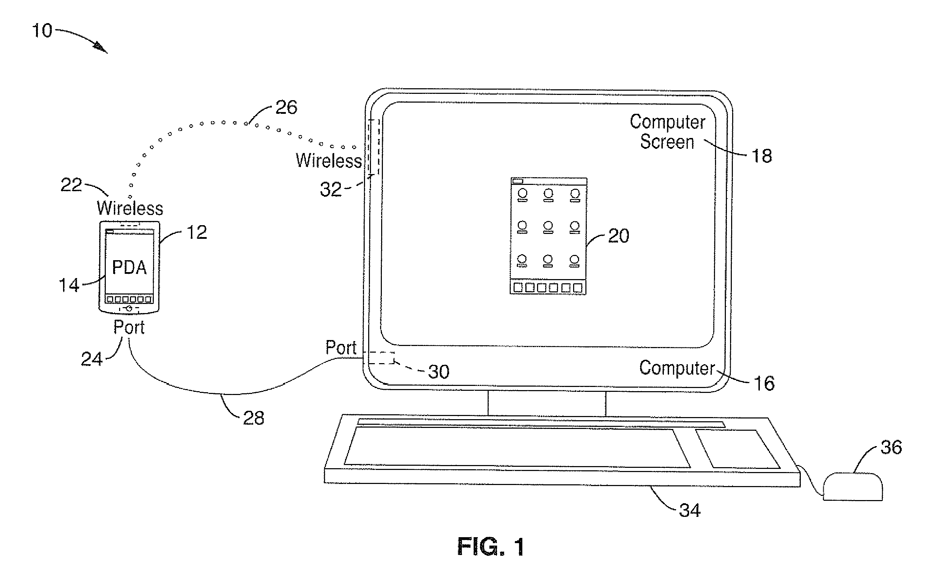

FIG. 1 illustrates an image recognition system 10 in accordance with the present invention. System 10 includes a mobile device (PDA) 12 having a screen 14 coupled to a computer 16 with display 18, keyboard 34 and mouse 36. The connection between the mobile device 12 and the computer 16 can be a local medium, such as USB connection 28 connecting ports 24 and 30, wireless connection 26 (e.g. Bluetooth connection or the like) coupling wireless antennas 22 and 32, or a remote connection 26 using network connections to the common network infrastructure, such as an Internet based file synchronization service.

FIG. 3 illustrates a schematic diagram of the system 50 of the present invention. PC emulation module or software 52, which may be loaded in memory 58 on the PC 16, memory 46 mobile of device 12, or both, provides an emulated PDA screen 20 on the screen of the connected computer 16. An application program 44 may be run on the mobile device 12 such that a document (or other window) is displayed for viewing/processing/editing and its screen image 20 is replicated on the computer screen 18.

When the user performs certain operations, the document opened by the mobile device 12 application program 44 is saved as a file, and automatically transferred from the mobile device storage file system 46 to the computer storage file system 58. Application association logic module 54 is configured to launch predefined equivalent PC application software 60 via processor 68 on the computer 18, wherein the copied computer file is opened via user interface 64 on the computer screen 28 in a window 62 outside or overlapping to the mobile device screen emulation window 20. The application association logic 54 is configured to find the equivalent PC application 60 for the mobile device application 44 of the selected file. For example, the mobile device 12 may have Mobile Outlook or Mobile Office (e.g. Mobile Word, Mobile Excel, and Mobile PowerPoint) loaded in memory. Thus, if a word document is selected, the application association logic 54 seeks the equivalent PC application 60 (MS Word) to the mobile device application 44 (Mobile Word).

When the computer processing of the file is completed, the file is transferred back to the memory 46 of the mobile device 12. File synchronization module 56 is configured to synchronize files that may be stored in memory 46 of device 12 or memory 58 of the computer 16, and update either of the files stored on the mobile device 12 or computer 16 if the file has been operated on either the mobile device 12 or computer 16 while not coupled to each other. The application association logic 54 and/or file synchronization module 56 are preferably configured to save the file on the mobile device memory 46 in a format that is readable by associated the mobile device application program 44.

User operation can be various types of user interfaces. For example, a user may perform a mouse drag/drop of the opened document rendition from/to the emulated mobile screen 20 on the computer display 18 to the other areas of the computer screen outside of the mobile device screen emulation window 20, e.g. the desktop or another window displayed on screen 18. The user may also perform equivalent GUI user operations on the mobile device screen 14. The user may also invoke GUI based menus or buttons of the emulation window 20. Furthermore, if the mobile device 12 is capable of detecting physical movements of the device body by means of, but not limited to, enclosed accelerometers (not shown) etc., swinging or movements mimicking the action of throwing the device contents to outside may be used to initiate file transfer initiation.

File transfer operations to/from the mobile device 12 from/to the 16 computer can be processed automatically by the initiation of user operations described above, or can cause prompting for confirmation of the file transfer between the devices, as well as special instructions such as the non-standard locations of the storage file structures (folders, etc.). Other special instructions may also be implemented, such as file synchronization of copies of the document or file that are stored on both devices.

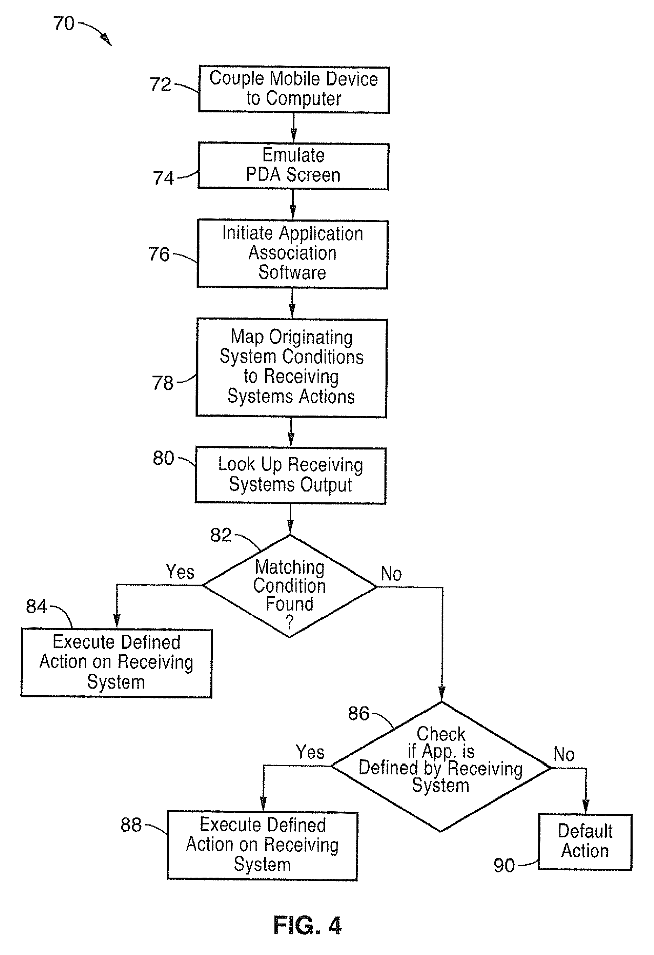

The function of the application association logic 54 is detailed in the method 70 illustrated in FIG. 4. The determination of the application software selection upon transition of the processing subject from the mobile device 12 to the computer 16 or visa versa is processed in the application association logic 54. It is appreciated that the bulk of processing of the following method is performed via the computer processor 68 (to take advantage of the generally higher processing power of the computer). However, some or all of the processing may also be achieved via the processor 48 of the mobile device 12.

In step 72, the mobile device 12 is coupled to the computer 16 via either wireless connection 26 or wired connection 28. At step 74, the PDA screen is emulated, and upon selection of a PDA software application 44, the application association software 54 is initiated in step 76.

The application association logic 54 preferably comprises an algorithm that maps the originating system conditions to the receiving system actions to file application association database 66 at step 78. In a typical situation, the originating system is the PDA 12, and the receiving system is the PC 16. However, it is appreciated that these roles may be reversed based on the desired function of the user. Database 66 is shown in FIG. 3 to be located or stored at the PC's memory 58. However, it is appreciated that the database may also be stored or cached on the PDA memory 46.

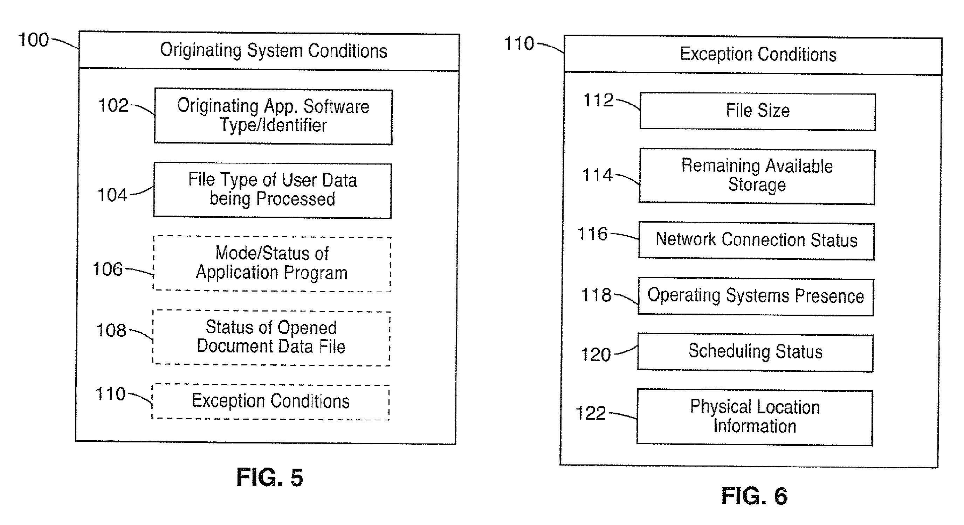

The originating system conditions 100, detailed further in FIG. 5, are a combination of parameters 102-110. For example, the originating system conditions 100 comprise application software type/identifier 102 and the file type 104 of the user data being processed in the originating application software 44.

An additional operating system condition may optionally comprise mode or status 106 of the application program, such as read-only viewing, open for modification, etc.

An optional operating system condition may comprise the status of the opened document data file 108. For example, criteria may comprise whether the document or file opened without exclusivity and has not been modified, opened with exclusivity and has not been modified, opened without exclusivity and modified unsaved, opened with exclusivity and modified unsaved, etc. Some information (e.g. 106, 108) may not be available for all application programs.

Optional parameters may also comprise exception conditions 110 detailed in FIG. 6. Exception conditions 110 may be one or more of the system or usage conditions not directly derived from the file types or the application program. Examples may be file size 112, or remaining available storage capacity 114 of the originating and/or receiving system. Remaining capacity definitions can be either the absolute data size, or the relative value to the total capacity of the file system.

Additional exception conditions may comprise network connection status/availability 116 between systems, presence of the operating systems or other underlying middle-ware data synchronization facilities 118, time, day of the week, and other scheduling status 120, or physical location information 122 obtained from the geographical location detection sensors on either systems, such as GPS receivers, etc., or schedule information from PIM application or subsystem that has location information attached.

Referring back to FIG. 4, the algorithm at step 80 looks up the receiving system action output from the database 66 by the current subject document/application software program on the originating system. If a matching condition is found (step 82), the defined action is executed on the receiving system, at step 84. If not (i.e. no matching conditions), the receiving system algorithm checks at step 86 if application association of the originating data file is defined by the receiving system's operating systems layer. If the application association for the originating data file is found, the defined action is executed on the receiving system at step 88. If no match is found or defined in the operating systems layer, a default action is taken at step 90. The default action my comprise opening the operating systems' general purpose file manager (e.g, Windows Explorer on the computer system) for the destination folder of the receiving system, or do nothing.

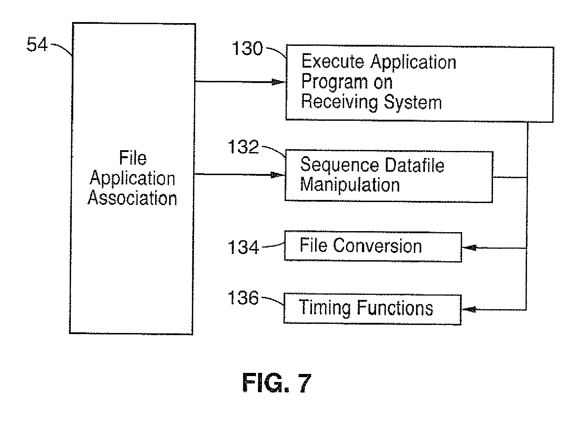

Referring to FIG. 7, receiving actions from the file application association logic 54 and association database 66 may include executing an application program on the receiving system with the received data file at step 130, or sequencing of the data file manipulation steps at step 182. Sequencing steps may comprise: copying/moving of the data file that has been automatically synchronized by the operating systems layer or separate data synchronization middle-ware, opening the file with an application program for processing, and updating the related synchronization folders of the processed/updated data file.

At least part of the sequences in steps 130 and 132 may include file conversion utility processing 134 if the file format of the originating system can be better handled in an application program on the receiving system, or timing functions 136, such as delay for a defined duration of the time, or on condition such as the size of the completed file transfer by absolute data size or relative value to the total file size being transferred, etc.

It is appreciated that in all of the previously described embodiments, the data file may be substituted to the network contents/objects by referencing in Universal Resource Identifiers or URL's.

The association database 66 definitions may be predefined before the installation of the device 12, or they may be user-configurable, or upgradeable by the manufacturer or the administrator, or any combination of the above. In addition, the system may be configured so that the application association logic can be turned on or off, permanently or temporarily, by the user.

Embodiments of the present invention are described with reference to flowchart illustrations of methods and systems according to embodiments of the invention. These methods and systems can also be implemented as computer program products. In this regard, each block or step of a flowchart, and combinations of blocks (and/or steps) in a flowchart, can be implemented by various means, such as hardware, firmware, and/or software including one or more computer program instructions embodied in computer-readable program code logic. As will be appreciated, any such computer program instructions may be loaded onto a computer, including without limitation a general purpose computer or special purpose computer, or other programmable processing apparatus to produce a machine, such that the computer program instructions which execute on the computer or other programmable processing apparatus create means for implementing the functions specified in the block(s) of the flowchart(s).

Accordingly, blocks of the flowcharts support combinations of means for performing the specified functions, combinations of steps for performing the specified functions, and computer program instructions, such as embodied in computer-readable program code logic means, for performing the specified functions. It will also be understood that each block of the flowchart illustrations, and combinations of blocks in the flowchart illustrations, can be implemented by special purpose hardware-based computer systems which perform the specified functions or steps, or combinations of special purpose hardware and computer-readable program code logic means.

Furthermore, these computer program instructions, such as embodied in computer-readable program code logic, may also be stored in a computer-readable memory that can direct a computer or other programmable processing apparatus to function in a particular manner, such that the instructions stored in the computer-readable memory produce an article of manufacture including instruction means which implement the function specified in the block(s) of the flowchart(s). The computer program instructions may also be loaded onto a computer or other programmable processing apparatus to cause a series of operational steps to be performed on the computer or other programmable processing apparatus to produce a computer-implemented process such that the instructions which execute on the computer or other programmable processing apparatus provide steps for implementing the functions specified in the block(s) of the flowchart(s).

As can be seen, therefore, the present invention includes the following embodiments among others:
1. An interface system for coupling a mobile device to a PC, comprising: a PC emulation module; said PC emulation module configured to emulate the screen of a mobile device in a first window on the display of a PC coupled to the mobile device; a file application association module; the file application association module configured to open an application associated with a file located in memory on the mobile device and display the application in a second window on the PC display; and a processor for operating the PC emulation module and file application association module.
2. An interface system as recited in embodiment 1, wherein the file application association module is configured to open the associated application in a second window overlapping or outside the first window.
3. An interface system as recited in embodiment 2, further comprising:
   a file synchronization module for synchronizing the file to be stored in memory
   on the mobile device and the PC.
4. An interface system as recited in embodiment 3, wherein: the file application association module is configured to open a PC application stored on the PC to operate said file; wherein the PC application is associated with an application stored on the mobile device; and wherein the PC application is opened in the second window.
5. An interface system as recited in embodiment 4, wherein file application association module is configured to operate the PC application using the PC's processor.
6. An interface system as recited in embodiment 4, wherein file application association module is configured to map one or more mobile device conditions to one or more PC actions in a database located on either the PC or mobile device.
7. An interface system as recited in embodiment 6, wherein the mobile device conditions comprise a mobile device application software identifier.
8. An interface system as recited in embodiment 7, wherein the mobile device conditions further comprise a file type associated with the mobile device application software.
9. An interface system as recited in embodiment 6, wherein the one or more PC actions comprises executing the PC application with the file.
10. An interface system for coupling a mobile device to a PC, comprising: a PC having a processor for executing a PC application stored in memory on the PC, and a display for displaying the executed PC application; a mobile device having a processor for executing a mobile device application stored in memory on the mobile device, and a display for displaying the executed mobile device application; a PC emulation module; said PC emulation module configured to emulate the screen of the mobile device in a first window on the display of the PC; a file application association module; wherein the file application association module is configured to execute a file on the mobile device with a PC application that is associated with said file and a mobile device application stored in memory on the mobile device; wherein the file application association module is configured to display the executed PC application in a second window on the PC display.
11. An interface system as recited in embodiment 10, wherein the file application association logic is configured to execute the PC application in a second window overlapping or outside the first window.
12. An interface system as recited in embodiment 10, further comprising: a file synchronization module for synchronizing the file to be stored in memory on the mobile device and the PC.
13. An interface system as recited in embodiment 10, wherein file application association module is configured to execute the PC application using the PC's processor.
14. An interface system as recited in embodiment 10, further comprising a database coupled to the file application association module; wherein file application association module is configured to map one or more mobile device conditions to one or more PC actions in the database.
15. An interface system as recited in embodiment 14, wherein the mobile device conditions comprise a mobile device application software identifier.
16. An interface system as recited in embodiment 15, wherein the mobile device conditions further comprise a file type associated with the mobile device application software.
17. An interface system as recited in embodiment 15, wherein the one or more PC actions comprises executing the PC application with the file.
18. An method for interfacing between a mobile device to a PC, comprising: coupling a mobile device to a PC; the PC having a processor for executing a PC application stored in memory on the PC, and a display for displaying the executed PC application; emulating the screen of the mobile device in a first window on the display of the PC; executing a file on the mobile device using a PC application that is associated with said file and a mobile device application stored in memory on the mobile device; and displaying the executed PC application in a second window on the PC display.
19. A method as recited in embodiment 18, wherein the executed PC application is displayed in a second window overlapping or outside the first window.
20. A method as recited in embodiment 19, further comprising:
   synchronizing the file between memory on the mobile device and the PC.
21. A method as recited in embodiment 19, wherein the PC application is executed using the PC's processor.
22. A method as recited in embodiment 18, wherein executing the PC application comprises selecting PC application software compatible with said file and associated mobile device application.
23. A method as recite in embodiment 22, wherein selecting PC application software comprises: mapping one or more mobile device conditions to one or more PC actions.
24. A method as recited in embodiment 23, wherein the mobile device conditions comprise a mobile device application software identifier and a file type associated with the mobile device application software.
25. A method as recited in embodiment 24, wherein the mobile device conditions additionally comprise on or more of the following: status of the PC application, status of the opened file, or exception conditions.
26. A method as recited in embodiment 23, wherein selecting the PC application software further comprises: looking up a receiving system action from a database according to the selected file and its associated application software.
27. A method as recited in embodiment 23, wherein the receiving system action comprises executing the PC application, the method further comprising:
   executing the receiving system action to execute the PC application and corresponding file.

Although the description above contains many details, these should not be construed as limiting the scope of the invention but as merely providing illustrations of some of the presently preferred embodiments of this invention. Therefore, it will be appreciated that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more." All structural, chemical, and functional equivalents to the elements of the above-described preferred embodiment that are known to those of ordinary skill in the art are expressly incorporated herein by reference and are intended to be encompassed by the present claims. Moreover, it is not necessary for a device or method to address each and every problem sought to be solved by the present invention, for it to be encompassed by the present claims. Furthermore, no element, component, or method step in the present disclosure is intended to be dedicated to the public regardless of whether the element, component, or method step is explicitly recited in the claims. In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An interface system for coupling a mobile device to a personal computer (PC), comprising:
a PC emulation module which is configured to emulate the screen of a mobile device in a first window on the display of a PC coupled to the mobile device;
a file application association module;
said file application association module configured to open an application associated with a file located in memory on the mobile device and display the application in a second window on the PC display; and
a processor for operating the PC emulation module and file application association module.

2. An interface system as recited in claim 1, wherein the file application association module is configured to open the associated application in a second window overlapping or outside the first window.

3. An interface system as recited in claim 2, further comprising:
a file synchronization module for synchronizing the file to be stored in memory on the mobile device and the PC.

4. An interface system as recited in claim 3:
wherein the file application association module is configured to open a PC application stored on the PC to operate said file;
wherein the PC application is associated with an application stored on the mobile device; and
wherein the PC application is opened in the second window.

5. An interface system as recited in claim 4, wherein file application association module is configured to operate the PC application within the processor of the PC.

6. An interface system as recited in claim 4, wherein file application association module is configured to map one or more mobile device conditions to one or more PC actions in a database located on either the PC or mobile device.

7. An interface system as recited in claim 6, wherein the mobile device conditions comprise a mobile device application software identifier.

8. An interface system as recited in claim 7, wherein the mobile device conditions further comprise a file type associated with the mobile device application software.

9. An interface system as recited in claim 6, wherein the one or more PC actions comprises executing the PC application with the file.

10. A system for coupling a mobile device to a personal computer (PC), comprising:
a PC having a processor for executing a PC application stored in memory on the PC, and a display for displaying the executed PC application;
a mobile device having a processor for executing a mobile device application stored in memory on the mobile device, and a display for displaying the executed mobile device application; and
an interface system according to any one of claims 1, 2, 3, 5 or 7, 8 or 9.

11. A system as recited in claim 10, wherein file application association module is configured to execute the PC application within the processor of the PC.

12. A system as recited in claim 10, further comprising:
a database coupled to the file application association module;
wherein file application association module is configured to map one or more mobile device conditions to one or more PC actions in the database.

13. A system as recited in claim 12, wherein the mobile device conditions comprise a mobile device application software identifier.

14. A system as recited in claim 13, wherein the mobile device conditions further comprise a file type associated with the mobile device application software.

15. A system as recited in claim 13, wherein the one or more PC actions comprises executing the PC application with the file.
